# FASCICULE DE BREVET EUROPEEN

(11) **EP 0 939 113 B1**
(45) Date de publication et mention de la délivrance du brevet: **13.08.2003**
(21) Numéro de dépôt: 99400447.1
(22) Date de dépôt: 24.02.1999
(51) Int. Cl.: C10G 47/20, B01J 29/78

(54) **Procédé d'hydrocraquage de charges pétrolières hydrocarbonées en présence d'un catalyseur comprenant au moins une zéolithe NU-85, NU-86 ou NU-87**
Hydrokrackverfahren in Gegenwart eines Katalysators mit mindestens einem NU-85, NU-86 oder NU-87 Zeolithen
Hydrocracking process in the presence of a catalyst comprising at least one zeolite of NU-85, NU-86 or NU-87

(30) Priorité: 26.02.1998 FR 9802312; 27.02.1998 FR 9802442
(43) Date de publication de la demande: 01.09.1999
(73) Titulaire: Institut Francais du Petrole, 92852 Rueil-Malmaison Cedex (FR)
(72) Inventeur: Benazzi, Eric, 78400 Chatou (FR); George-Marchal, Nathalie, 69230 Saint Genis Laval (FR); Kasztelan, Slavik, 92500 Rueil Malmaison (FR)

(56) Documents cités:
- EP-A- 0 377 291
- EP-A- 0 378 916
- EP-A- 0 462 745
- EP-A- 0 463 768
- EP-A- 0 785 021

## Description

La présente invention concerne un procédé d'hydrocraquage de charges pétrolières hydrocarbonées en présence d'un catalyseur, ledit catalyseur comprenant au moins un métal choisi dans le groupe formé par les métaux du groupe VIB et du groupe VIII (groupe 6 et/ou groupes 8, 9 et 10 selon la nouvelle notation de la classification périodique des éléments : Handbook of Chemistry and Physics, 76ième édition, 1995-1996), associés à un support comprenant au moins une matrice poreuse amorphe ou mal cristallisée et au moins une zéolithe choisie dans le groupe des zéolithes NU-85, NU-86 et NU-87. Le catalyseur renferme éventuellement du phosphore, éventuellement au moins un élément du groupe VIIA (groupe 17 des halogènes).

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellentes bases pour huiles. Par rapport au craquage catalytique, l'intérêt de l'hydrocraquage catalytique est de fournir des distillats moyens, carburéacteurs et gazoles, de très bonne qualité. L'hydrocraquage permet, à l'aide de catalyseurs adaptés, de produire également de l'essence qui présente un indice d'octane beaucoup plus faible que celle issue du craquage catalytique mais qui contient par contre des teneurs en soufre et impuretés considérablement plus faible que l'essence issue du craquage catalytique. L'indice d'octane de l'essence d'hydrocraquage est alors augmenté par un traitement subséquent de reformage approprié.

Les catalyseurs utilisés en hydrocraquage sont généralement du type bifonctionnels associant une fonction acide à une fonction hydrogénante. La fonction acide est apportée par des supports de grandes surfaces (150 à 800 m²g⁻¹ généralement) présentant une acidité superficielle, telles que les alumines halogénées (chlorées ou fluorées notamment), les silice-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par au moins un métal du groupe VIB tels que molybdène, tungstène et chrome soit par une association d'au moins un métal du groupe VIB ,et au moins un métal du groupe VIII. L'élément éventuel du groupe VIIA est choisi parmi le fluor, le chlore, le brome et l'iode.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens et donc d'une mauvaise sélectivité en essence. Inversement, une fonction acide forte et une fonction hydrogénante faible donnent des catalyseurs actifs mais présentant de moins bonnes sélectivités en distillats moyens et donc de meilleures sélectivités en essence. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant par exemple de la zéolithe Y de type structural FAU, ou les catalyseurs contenant par exemple une zéolithe de type bêta présentent quant à eux une activité catalytique supérieure à celle des silice-alumines amorphes, et présentent des sélectivités en produits légers qui sont plus élevées.

Le document EP-A-0 462 745 décrit un procédé d'hydrocraquage de charges hydrocarbonées en présence d'un catalyseur renfermant au moins un métal, une matrice et une zéolithe NU-85. Les documents EP-A-0 463 768 et EP-A-0 378 916 font de même pour les zéolithes NU-86 et NU-87 respectivement. Ces documents citent le Cr, Mo, W (métaux du groupe VIB), Fe, Co, Ni et les métaux nobles (métaux du groupe VIII) comme constituants caractéristiques pouvant être introduits sur ces zéolithes pour en faire des catalyseurs de conversion d'hydrocarbures. Ces documents citent aussi la possibilité d'introduire du phosphore par imprégnation ou par échange ionique sur ces zéolithes.

Les travaux de recherche effectués par le demandeur sur de nombreuses zéolithes et solides microporeux cristallisés l'ont conduit à découvrir que, de façon surprenante, un procédé d'hydrocraquage de charges pétrolières hydrocarbonées en présence d'un catalyseur contenant au moins une matrice et au moins une zéolithe choisie dans le groupe NU-85, NU-86 et NU-87, au moins un métal choisi dans le groupe formé par les métaux du groupe VIB et du groupe VIII de la classification périodique, du phosphore, éventuellement au moins un élément du groupe VIIA, permet d'obtenir des rendements en essence plus élevé qu'un procédé d'hydrocraquage de charges pétrolières hydrocarbonées en présence de catalyseurs connus dans l'art antérieur.

La fonction hydrogénante est choisie parmi les métaux du groupe VIII tels que le fer, le nickel, le cobalt, le platine, le palladium, le ruthérium, le rhodium, l'osmium, l'iridium et les métaux du groupe VIB tels que le chrome, le tungstène et le molybdène.

La zéolithe NU-85 utilisée dans ce brevet est décrite dans le brevet EP-A2-462745.

Les zéolithes NU-85 qui entrent dans la composition selon l'invention sont utilisées avec les teneurs en silicium et aluminium obtenues à la synthèse.

La zéolithe NU-86, sous forme hydrogène ou partiellement sous forme hydrogène, désignée par H-NU-86 et obtenue par calcination et/ou échanges ioniques de la zéolithe NU-86 brute de synthèse, employée dans le procédé selon l'invention ainsi que le mode de synthèse de ladite brute de synthèse, sont décrits dans le brevet EP-0463768 A2.

Le type structural de cette zéolithe n'a pas encore été officiellement attribué par la commission de synthèse de l'lZA (International Zeolite Association). Cependant, suite aux travaux publiés au 9ieme Congrès International sur les Zéolithes par J.L. Casci, P.A. Box et M.D. Shannon ("Proceedings of the 9th International Zeolite Conference, Montreal 1992, Eds R. Von Ballmoos et al., 1993 by Butterworth) il apparaît que :
- la zéolithe NU-86 possède un système microporeux tridimensionnel;
- ce système microporeux tridimensionnel est constitué de canaux droits dont l'ouverture de pore est délimitée par 11 atomes T (atomes tétraédriques : Si, Al, Ga, Fe..), de canaux droits délimités alternativement par des ouvertures à 10 et 12 atomes T et des canaux sinusoïdaux aussi délimités de façon alternative par des ouvertures à 10 et 12 atomes T.

On entend par le terme ouverture de pores à 10, 11 ou 12 atomes tétraédriques (T) des pores constitués de 10, 11 ou 12 côtés.

La zéolithe NU-86 utilisée dans la composition selon l'invention est au moins en partie, de préférence pratiquement totalement, sous forme acide, c'est-à-dire sous forme hydrogène (H+). Le rapport atomique Na/T est généralement inférieur à 90% et de préférence inférieur à 50% et de manière encore plus préférée inférieur à 10%.

En ce qui concerne la zéolithe NU-87 de type structural NES aussi utilisée dans la présente invention, elle est décrite dans le brevet EP-A1-377291 ainsi que dans le document "Atlas of Zeolite Structure Types", de W.M. Meier, D.H. Olson and
Ch. Baerlocher, Fourth revised édition 1996, Elsevier.

On emploiera de préférence les zéolithes NU-85, NU-86 et NU-87 au moins en partie sous forme acide (et de préférence en totalité sous forme H) ou partiellement échangée avec des cations métalliques, par exemple des cations des métaux alcalino-terreux.

Les zéolithes NU-85, NU-86 et NU-87 qui entrent dans la composition selon l'invention sont utilisées avec les teneurs en silicium et aluminium obtenues à la synthèse.

Le catalyseur utilisé dans le procédé selon la présente invention renferme donc également au moins une matrice minérale poreuse amorphe ou mal cristallisée de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

En outré, le catalyseur renferme du phosphore, éventuellement au moins un élément du groupe VIIA, de préférence le fluor. La fonction hydrogénante est telle qu'elle a été définie précédemment, c'est à dire au moins un métal choisi dans le groupe VIB et/ou le groupe VIII.

Le catalyseur utilisé dans le procédé selon la présente invention renferme généralement en % poids par rapport à la masse totale du catalyseur au moins un métal choisi dans les groupes suivants et avec les teneurs suivantes :
- 0,1 à 60%, de préférence de 0,1 à 50% et de manière encore plus préférée de 0,1 à 40% d'au moins un métal choisi dans le groupe formé par les métaux du groupe VIB et du groupe VIII,
- le catalyseur renferme au moins une matrice minérale poreuse amorphe ou mal cristallisée de type oxyde, dont la teneur pondérale par rapport à l'ensemble du catalyseur varie de 0,1 à 99 %, de préférence de 1 à 99%,
- le catalyseur renferme en outre de 0,1 à 90%, de préférence de 0,1 à 80% et de manière encore plus préférée de 0,1 à 70% d'au moins une zéolithe choisie dans le groupe NU-85, NU-86 et NU-87,
et éventuellement,
- 0 à 20%, de préférence de 0,1 à 15% et de manière encore plus préférée de 0,1 à 10% de phosphore,
et éventuellement encore,
- 0 à 20%, de préférence de 0,1 à 15% et de manière encore plus préférée de 0,1 à 10% d'au moins un élément choisi dans le groupe VIIA, de préférence le fluor.

Les métaux du groupe VIB et du groupe VIII du catalyseur utilisé dans le procédé de la présente invention peuvent être présents au moins en partie sous la forme choisie parmi la forme métallique, et/ou oxyde et/ou sulfure.

Le catalyseur de la présente invention peut être préparé par toutes les méthodes bien connues de l'homme du métier. Avantageusement, il est obtenu par mélange de la matrice et de la zéolithe puis mise en forme du mélange. L'élément hydrogénant est par exemple introduit lors du mélange, ou encore de manière préférée après mise en forme. La mise en forme est suivie d'une calcination. L'élément hydrogénant est introduit avant ou après cette calcination. La préparation se termine dans tous les cas par une calcination à une température de 250 à 600°C.

Une des méthodes préférées dans la présente invention consiste à malaxer une zéolithe NU-85, NU-86 ou NU-87, dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante peut être introduite à divers moment et de différente manière. Ainsi, par exemple la fonction hydrogénante peut être introduite au moins en partie (cas, par exemple, des associations d'oxydes de métaux des groupes VIB et VIII) au moment du malaxage de la zéolithe, avec le gel d'oxyde choisi comme matrice.

Dans un autre mode de réalisation, la fonction hydrogénante peut être par exemple introduite par une opération d'échange ionique sur le support calciné constitué d'au moins une zéolithe choisie dans le groupe NU-85, NU-86 et NU-87, dispersée dans la matrice choisie, à l'aide de solutions contenant les sels précurseurs des métaux choisis lorsque ceux-ci appartiennent au groupe VIII.

La fonction hydrogénante peut enfin être introduite par au moins une opération d'imprégnation du support calciné constitué d'au moins une zéolithe choisie dans le groupe NU-85, NU-86 et NU-87 et de la matrice, par des solutions contenant au moins un précurseur d'au moins un oxyde d'au moins un métal choisi dans le groupe formé par les métaux des groupes VIB et VIII, le(s) précurseur(s) d'au moins un oxyde d'au moins un métal du groupe VIII étant de préférence introduit(s) après ceux du groupe VIB ou en même temps que ces derniers, si le catalyseur contient au moins un métal du groupe VIB et au moins un métal du groupe VIII.

Dans le cas où les éléments sont introduits en plusieurs imprégnations des sels précurseurs correspondants, une étape de calcination intermédiaire du catalyseur devra être effectuée à une température comprise entre 250 et 600 °C, et une étape de séchage intermédiaire du catalyseur est généralement effectuée à une température généralement comprise entre 60 et 250°C.

Le phosphore, au moins un élément choisi parmi les ions halogénures du groupe VIIA, peuvent être introduits par une ou plusieurs opérations d'imprégnation avec excès de solution sur le précurseur calciné.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium

Le catalyseur utilisé dans le procédé de la présente invention peut renfermer au moins un élément du groupe VIII tel que fer, cobalt, nickel, ruthénium, rhodium, palladium, osmium, iridium ou platine. Par exemple, on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène. Il est également possible d'utiliser des associations de trois métaux par exemple nickel-cobalt-molybdène.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH₄)₂SiF₆, le tétrafluorure de silicium SiF₄ ou de sodium Na₂SiF₆. Le fluor peut être introduit par exemple par imprégnation d'une solution aqueuse d'acide fluorhydrique ou de fluorure d'ammonium.

Les catalyseurs ainsi obtenus, sous forme oxydes, peuvent éventuellement être amenés au moins en partie sous forme métallique ou sulfure.

Les catalyseurs obtenus sont mis en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. Les catalyseurs présentent une surface spécifique mesurée par adsorption d'azote selon la méthode BET (Brunauer, Emmett, Teller, J. Am. Chem. Soc., vol. 60, 309-316 (1938)) comprise entre 50 et 600 m²/g, un volume poreux mesuré par porosimétrie au mercure compris entre 0,2 et 1,5 cm³/g et une distribution en taille de pores pouvant être monomodale, bimodale ou polymodale.

La présente invention est l'utilisation des catalyseurs obtenus pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et de préférence comprise entre 250°C et 480°C. La pression est supérieure à 0,1 MPa et de préférence supérieure à 1 MPa. Le taux de recyclage d'hydrogène est supérieur à 50 et de préférence compris entre 80 et 5000 normaux litres d'hydrogène par litre de charge. La vitesse volumique horaire est comprise en général entre 0,1 et 20 volume de charge par volume de catalyseur et par heure.

Les catalyseurs utilisés dans la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur utilisé dans la présente invention peut être avantageusement employé pour l'hydrocraquage de coupes de type distillats sous vide fortement chargées en soufre et azote.

Le catalyseur de la présente invention peut être employé pour l'hydrocraquage dans des conditions de pression d'hydrogène élevées d'au moins 5 MPa. Les coupes traitées sont par exemple de type distillats sous vide fortement chargées en soufre et azote qui ont été préalablement hydrotraitées. Dans ce cas, le procédé de conversion de coupe pétrolière se déroule de préférence en deux étapes, avec ou sans opération de séparation ou de distillation intermédiaire, le catalyseur selon l'invention étant utilisé dans la deuxième étape.

Le catalyseur de la première étape a une fonction d'hydrotraitement et comprend une matrice de préférence à base d'alumine, et au moins un métal ayant une fonction hydrogénante. Tout catalyseur d'hydrotraitement connu de l'homme de métier peut être utilisé. La fonction hydro-deshydrogénante est assurée par au moins un métal ou composé de métal seul ou en combinaison choisi parmi les métaux du groupe VIB et du groupe VIII tels que le nickel, le cobalt, le molybdène et le tungstène. De plus, ce catalyseur peut contenir éventuellement du phosphore du bore.

La première étape se déroule généralement à une température de 350-460°C, de préférence 360-450°C, une pression supérieure à 3MPa, une vitesse volumique horaire de 0.1-5h⁻¹ et de préférence 0.2-2h⁻¹ et avec une quantité d'hydrogène d'au moins 100NI/I de charge, et de préférence 260-3000NI/I de charge.

Pour l'étape de conversion avec le catalyseur selon l'invention (ou seconde étape), les températures sont en général supérieures ou égales à 230°C et souvent comprises entre 300°C et 480°C de préférence entre 300 et 440°C. La pression est en général supérieure à 5MPa et de préférence supérieure à 7 MPa. La quantité d'hydrogène est au minimum de 100 Nl/l de charge et souvent comprise entre 200 et 3000 Nl/l d'hydrogène par litre de charge. La vitesse volumique horaire est comprise en général entre 0,15 et 10h⁻¹.

Dans ces conditions, les catalyseurs utilisé dans la présente invention présentent une meilleure sélectivité en distillats légers (essence, kérosène) que les catalyseurs commerciaux, même pour des teneurs en zéolithe considérablement plus faibles que celles des catalyseurs de l'art antérieur.

Les exemples suivants illustrent la présente invention sans toutefois en limiter la portée.

### Exemple 1: Préparation d'un support de catalyseur d'hydrocraquage contenant une zéolithe NU-85

Un support de catalyseur d'hydrocraquage contenant une zéolithe NU-85 a été fabriqué en grande quantité de façon à pouvoir préparer différents catalyseurs à base du même support. La matière première utilisée est une zéolithe NU-85, qui est préparée selon l'exemple 4 du brevet EP 462.745 A2 et possède un rapport Si/AI atomique global égal à 13,1 et un rapport atomique Na/AI égal 0,23.

Cette zéolithe NU-85 subit tout d'abord une calcination dite sèche à 550°C sous flux d'air sec durant 20 heures. Puis le solide obtenu est soumis à quatre échanges ioniques dans une solution de NH₄NO₃ 10N, à environ 100°C pendant 4 heures pour chaque échange. Le solide ainsi obtenu est référencé NH₄-NU-85/1 et possède un rapport Si/AI = 13,8 et un rapport Na/AI = 0,005. Ses autres caractéristiques physico-chimiques sont regroupées dans le tableau 1.

**Tableau 1**

| Echantillon | Adsorption | |
|---|---|---|
| | S_{BET} (m²/g) | V(P/P_{O} = 0,19) ml N₂ liquide/g |
| NH₄-NU-85/1 | 436 | 0,18 |

18,6 grammes de zéolithe H-NU-85, préparée précédemment sont dans un premier temps mélangées puis malaxées avec 81,4 grammes d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés et calcinés à 500° C pendant 2 heures sous air sec.

### Exemple 2 : Préparation de catalyseurs d'hydrocraquage contenant une zéolithe NU-85 (conforme à l'invention)

Les extrudés de support préparés dans l'exemple 1 sont imprégnés à sec par une solution d'un mélange d'heptamolybdate d'ammonium et de nitrate de nickel, et enfin calcinés sous air à 550 °C in-situ dans le réacteur. Les teneurs pondérales en oxydes du catalyseur NU85NiMo obtenu sont indiquées dans le tableau 2.

Les extrudés de support de l'exemple 1 sont imprégnés à sec par une solution d'un mélange d'heptamolybdate d'ammonium, de nitrate de nickel et d'acide orthophosphorique, et enfin calcinés sous air à 550 °C in-situ dans le réacteur. Les teneurs pondérales en oxydes du catalyseur NU85NiMoP obtenus sont indiquées dans le tableau 2.

On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur NU85NiMoPF.

Les teneurs finales en oxydes des catalyseurs NU85NiMo sont indiquées dans le tableau 2.

Les extrudés de support contenant une zéolithe NU-85 de l'exemple 1 sont également imprégnés à sec par une solution aqueuse d'heptamolybdate d'ammonium, séchés une nuit à 120°C sous air et enfin calcinés sous air à 550°C. Les teneurs pondérales en oxydes du catalyseur NU85Mo obtenus sont indiquées dans le tableau 3.

D'une manière similaire, les extrudés de support contenant une zéolithe NU-85 de l'exemple 1 sont également imprégnés à sec par une solution aqueuse d'heptamolybdate d'ammonium et d'acide phosphorique, séchés une nuit à 120°C sous air et enfin calcinés sous air à 550°C. Les teneurs pondérales en oxydes du catalyseur NU85MoP obtenus sont indiquées dans le tableau 3. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur NU85MoPF.

Les teneurs finales en oxydes des catalyseurs NU85Mo sont indiquées dans le tableau 3.

**Tableau 2 :**

| Caractéristiques des catalyseurs NU85NiMo | | | |
|---|---|---|---|
| Catalyseur | NU85NiMo | NU85NiMo P | NU85NiMo PF |
| MoO₃ (% pds) | 14,3 | 13,7 | 13,5 |
| NiO (% pds) | 3,1 | 2,9 | 2,9 |
| P₂O₅ (% pds) | 0 | 4,8 | 4,8 |
| SiO₂ (% pds) global | 14,4 | 13,6 | 13,4 |
| F (% pds) | 0 | 0 | 1,06 |
| Complément à 100% (majoritairement composé de Al₂O₃ (% pds) | 68,2 | 65,0 | 64,2 |

**Tableau 3 :**

| Caractéristiques des catalyseurs NU85Mo | | | |
|---|---|---|---|
| Catalyseur | NU85Mo | NU85Mo P | NU85Mo PF |
| MoO₃ (% pds) | 14,6 | 13,95 | 13,8 |
| P₂O₅ (% pds) | 0 | 4,8 | 4,7 |
| SiO₂ (% pds) | 14,8 | 14,1 | 13,7 |
| F (% pds) | 0 | 0 | 1,1 |
| Complément à 100% composé majoritairement de Al₂O₃ (% pds) | 70,6 | 67,1 | 66,1 |

### Exemple 3 : Préparation d'un support contenant une zéolithe Nu-85 et une silice-alumine

Nous avons fabriqué une poudre de silice-alumine par coprécipitation ayant une composition de 2% SiO₂ et 98% Al₂O₃. Un support de catalyseur d'hydrocraquage contenant cette silice-alumine et la zéolithe Nu-85 de l'exemple 1 a été ensuite fabriqué. Pour cela on utilise 19,1 % poids de la zéolithe Nu-85 de l'exemple 1 que l'on mélange à 80,9 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air.

### Exemple 4 : Préparation de catalyseurs d'hydrocraquage contenant une zéolithe NU-85 et une silice-alumine

Les extrudés de support contenant une silice-alumine et une zéolithe Nu-85 de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NU85-SiAl-NiMoP obtenus sont indiquées dans le tableau 4.

On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur NU85-SiAl-NiMoPF.

Les caractéristiques des catalyseurs NU85-SiAl-NiMo sont résumées dans le tableau 4.

**Tableau 4 :**

| Caractéristiques des catalyseurs | | |
|---|---|---|
| Catalyseur | NU85-SiAI-NiMo P | NU85-SiAl-NiMo PF |
| MoO₃ (% pds) | 13,5 | 13,4 |
| NiO (% pds) | 2,8 | 2,8 |
| P₂O₅ (% pds) | 5,0 | 4,95 |
| F (% pds) | 0 | 0,84 |
| SiO₂ (% pds) | 15,3 | 16,5 |
| Complément à 100% composé majoritairement de Al₂O₃ (% pds) | 63,4 | 61,5 |

### Exemple 5 : Préparation d'un support contenant une zéolithe NU-86

Un support de catalyseur d'hydrocraquage contenant une zéolithe NU-86 a été fabriqué en grande quantité de façon à pouvoir préparer différents catalyseurs à base du même support. La matière première utilisée est une zéolithe NU-86, qui est préparée selon l'exemple 2 du brevet EP 0 463768 A2 et possède un rapport Si/AI atomique global égal à 10,2 et un rapport atomique Na/AI égal 0,25.

Cette zéolithe NU-86, brute de synthèse, subit tout d'abord une calcination dite sèche à 550°C sous flux d'air sec durant 9 heures. Puis le solide obtenu est soumis à quatre échanges ioniques dans une solution de NH₄NO₃ 10N, à environ 100°C pendant 4 heures pour chaque échange. Le solide ainsi obtenu est référencé NH4-NU-86/1 et possède un rapport Si/AI = 10,4 et un rapport Na/Al = 0,013. Ses autres caractéristiques physico-chimiques sont regroupées dans le tableau 5.

**Tableau 5**

| Echantillon | Diffraction X Cristallinité (%) | Adsorption | |
|---|---|---|---|
| | | S_{BET} (m²/g) | V(P/P_{O} = 0,19) ml N₂ liquide/g |
| NH4-NU-86/1 | 100 | 423 | 0,162 |

Les cristallites de la zéolithe NU-86 se présentent sous forme de cristaux dont la taille varient de 0,4 µm à 2 µm.

Ensuite, 19,5 g de la zéolithe NH₄-NU-86/2 sont mélangés à 80,5 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% poids (7% poids d'acide par gramme de gel sec) puis malaxé pendant 15 minutes. La pâte malaxée est ensuite extrudée à travers une filière de diamètre 1,2 mm. Les extrudés sont ensuite calcinés à 500°C durant 2 heures sous air.

### Exemple 6 : Préparation de catalyseurs d'hydrocraquage contenant une zéolithe NU-86 (conforme à l'invention)

On reproduit les mêmes imprégnations que décrites dans l'exemple 2 en utilisant les extrudés de l'exemple 5.

Les teneurs finales en oxydes des catalyseurs NU86NiMo sont indiquées dans le tableau 6.

Les teneurs finales en oxydes des catalyseurs NU86Mo sont indiquées dans le tableau 7.

**Tableau 6 :**

| Caractéristiques des catalyseurs NU86NiMo | | | |
|---|---|---|---|
| Catalyseur | NU86NiMo | NU86NiMoP | NU86NiMoPF |
| MoO₃ (% pds) | 14,1 | 13,4 | 13,3 |
| NiO (% pds) | 3,2 | 3,1 | 3,0 |
| P₂O₅ (% pds) | 0 | 4,1 | 4,1 |
| SiO₂ (% pds) global | 14,7 | 14,1 | 13,9 |
| F (% pds) | 0 | 0 | 1,0 |
| Complément à 100% (majoritairement composé de Al₂O₃ (% pds) | 68,0 | 65,3 | 64,5 |

**Tableau 7 :**

| Caractéristiques des catalyseurs NU86Mo | | | |
|---|---|---|---|
| Catalyseur | NU86Mo | NU86MoP | NU86MoPF |
| MoO₃ (% pds) | 14,5 | 14,00 | 13,9 |
| P₂O₅ (% pds) | 0 | 4,1 | 4,2 |
| SiO₂ (% pds) | 15,2 | 14,6 | 14,4 |
| F (% pds) | 0 | 0 | 1,01 |
| Complément à 100% composé majoritairement de Al₂O₃ (% pds) | 70,2 | 67,3 | 66,6 |

### Exemple 7 : Préparation d'un support contenant une zéolithe Nu-86 et une silice-alumine

On reproduit la même préparation que celle décrite à l'exemple 3 en utilisant la zéolithe NU-86 de l'exemple 5.

### Exemple 8 : Préparation de catalyseurs d'hydrocraquage contenant une zéolithe NU-86 et une silice-alumine

On reproduit la même préparation que celle décrite à l'exemple 4 en utilisant la zéolithe NU-86 de l'exemple 7.

Les caractéristiques des catalyseurs NU86-SiAl-NiMo sont résumées dans le tableau 8.

**Tableau 8 :**

| Caractéristiques des catalyseurs NU86-SiAl-NiMo | | |
|---|---|---|
| Catalyseur | NU86-SiAI-NiMoP | NU86-SiAI-NiMoPF |
| MoO₃ (% pds) | 13,4 | 13,3 |
| NiO (% pds) | 3,0 | 3,0 |
| P₂O₅ (% pds) | 4,2 | 4,15 |
| F (% pds) | 0 | 0,87 |
| SiO₂ (% pds) | 15,6 | 15,4 |
| Complément à 100% composé majoritairement de Al₂O₃ (% pds) | 63,9 | 63,3 |

### Exemple 9: Préparation d'un support de catalyseur d'hydrocraquage contenant une zéolithe NU-87

La matière première utilisée est une zéolithe NU-87, qui possède un rapport atomique Si/AI global égal à 17,2, une teneur pondérale en sodium correspondant à un rapport atomique Na/AI égal à 0,144. Cette zéolithe NU-87 a été synthétisée d'après la demande de brevet européen EP-A-0.377.291.

Cette zéolithe NU-87 subit tout d'abord une calcination dite sèche à 550°C sous flux d'air sec durant 6 heures. Puis le solide obtenu est soumis à quatre échanges ioniques dans une solution de NH₄NO₃ 10N, à environ 100°C pendant 4 heures pour chaque échange. Le solide ainsi obtenu est référencé NH4-NU-87 et possède un rapport Si/AI = 17,4 et un rapport Na/Al=0,002. Ses autres caractéristiques physico-chimiques sont regroupées dans le tableau 9.

**Tableau 9**

| Echantillon | Diffraction X: Paramètres | | | | | | Adsorption | |
|---|---|---|---|---|---|---|---|---|
| | a | b | c | β | V | Crist.⁽¹⁾ | ^{S}BET | V⁽²⁾ |
| | (Å) | (Å) | (Å) | (°) | (Å³) | (%) | (m²/g) | |
| NH4-NU-87 | 14,35 | 22,34 | 25,14 | 151,53 | 3840 | 100 | 466 | 0,19 |
| ^{*(1)*} *Cristallinité,* ^{*(2)*} *V à P*/*Po=0,19 en ml N2 liquide*/*g* | | | | | | | | |

Un support de catalyseur d'hydrocraquage contenant une zéolithe NU-87 est fabriqué de la façon suivante : on utilise 20 % poids d'une zéolithe NU-87 que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air.

### Exemple 10 : Préparation de catalyseurs d'hydrocraquage contenant une zéolithe NU-87 (conforme à l'invention)

On reproduit la même préparation que celle décrite à l'exemple 2, mais en utilisant les extrudés de l'exemple 9.

Les teneurs finales en oxydes des catalyseurs NU87NiMo sont indiquées dans le tableau 10.

Les teneurs finales en oxydes des catalyseurs NU87Mo sont indiquées dans le tableau 11.

**Tableau 10 :**

| Caractéristiques des catalyseurs NU87NiMo | | | |
|---|---|---|---|
| Catalyseur | NU87NiMo | NU87NiMoP | NU87NiMoPF |
| MoO₃ (% pds) | 13,9 | 13,4 | 13,2 |
| NiO (% pds) | 3,3 | 3,1 | 3,1 |
| P₂O₅ (% pds) | 0 | 4,35 | 4,3 |
| SiO₂ (% pds) global | 14,9 | 14,2 | 14,0 |
| F (% pds) | 0 | 0 | 0,92 |
| Complément à 100% (majoritairement composé de Al₂O₃ (% pds) | 67,9 | 65,0 | 64,3 |

**Tableau 11 :**

| Caractéristiques des catalyseurs NU87Mo | | | |
|---|---|---|---|
| Catalyseur | NU87Mo | NU87Mo | NU87Mo |
| MoO₃ (% pds) | 14,2 | 13,6 | 13,5 |
| P₂O₅ (% pds) | 0 | 4,3 | 4,3 |
| SiO₂ (% pds) | 15,4 | 14,7 | 14,6 |
| F (% pds) | 0 | 0 | 0,9 |
| Complément à 100% composé majoritairement de Al₂O₃ (% pds) | 70,3 | 67,2 | 66,6 |

### Exemple 11 : Préparation d'un support contenant une zéolithe Nu-87 et une silice-alumine

On reproduit la même préparation que celle décrite à l'exemple 3, mais en utilisant la zéolithe NU-87 de l'exemple 9.

### Exemple 12 : Préparation de catalyseurs d'hydrocraquage contenant une zéolithe NU-87 et une silice-alumine

On reproduit la même préparation que celle décrite à l'exemple 4, mais en utilisant les extrudés de l'exemple 11.

Les caractéristiques des catalyseurs NU87-SiAl-NiMo sont résumées dans le tableau 12.

**Tableau 12 :**

| Caractéristiques des catalyseurs NU87-SiAl-NiMo | | |
|---|---|---|
| Catalyseur | NU87-SiAl-NiMoP | NU87-SiAl-NiMoPF |
| MoO₃ (% pds) | 13,9 | 13,3 |
| NiO (% pds) | 3,1 | 3,0 |
| P₂O₅ (% pds) | 4,2 | 4,1 |
| F (% pds) | 0 | 0,80 |
| SiO₂ (% pds) | 16,3 | 16,2 |
| Complément à 100% composé majoritairement de Al₂O₃ (% pds) | 63,0 | 62,5 |

### Exemple 13 : Préparation d'un support contenant une zéolithe Y

Un support de catalyseur d'hydrocraquage contenant une zéolithe Y a été fabriqué en grande quantité de façon à pouvoir préparer différents catalyseurs à base du même support. Pour cela on utilise 20,5 % poids d'une zéolithe Y désaluminée de paramètre cristallin égal à 2,429 nm et de rapport SiO₂/Al₂O₃ global de 30,4 et de rapport SiO₂/Al₂O₃ de charpente de 58 que l'on mélange à 79,5 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 223 m²/g et une distribution en taille de pore monomodale centrée sur 10 nm. L'analyse de la matrice par la diffraction des rayons X révèle que celle ci est composée d'alumine gamma cubique de faible cristallinité et de zéolithe Y désaluminée.

### Exemple 14: Préparation de catalyseurs d'hydrocraquage contenant une zéolithe Y ( non conforme à l'invention)

Les extrudés de support contenant une zéolithe Y désaluminée de l'exemple 13 sont imprégnés à sec par une solution aqueuse d'un mélange d'heptamolybdate d'ammonium et de nitrate de nickel, séchés une nuit à 120°C sous air et enfin calcinés sous air à 550°C. Le catalyseur YNiMo final contient en particulier 17,1 % poids de zéolithe Y de paramètre de maille 2,429 nm de rapport SiO₂/Al₂O₃ global de 30,0 et de rapport SiO₂/Al₂O₃ de charpente de 57.

Les extrudés de support contenant une zéolithe Y désaluminée de l'exemple 13 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Le catalyseur YNiMoP final contient en particulier 16,3 % poids de zéolithe Y de paramètre de maille 2,429 nm de rapport SiO₂/Al₂O₃ global de 30,4 et de rapport SiO₂/Al₂O₃ de charpente de 58.

On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur YNiMoPF.

Les caractéristiques des catalyseurs YNiMo sont résumées dans le tableau 13.

Les extrudés de support contenant une zéolithe Y désaluminée de l'exemple 13 sont également imprégnés à sec par une solution aqueuse d'heptamolybdate d'ammonium, séchés une nuit à 120°C sous air et enfin calcinés sous air à 550°C pour obtenir le catalyseur YMo. D'une manière similaire, les extrudés de support contenant une zéolithe Y désaluminée de l'exemple 13 sont également imprégnés à sec par une solution aqueuse d'heptamolybdate d'ammonium et d'acide phosphorique, séchés une nuit à 120°C sous air et enfin calcinés sous air à 550°C. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur YMoPF.

Les teneurs finales en oxydes des catalyseurs YMo sont indiquées dans le tableau 14.

**Tableau 13 :**

| Caractéristiques des catalyseurs YNiMo | | | |
|---|---|---|---|
| Catalyseur | YNiMo | YNiMoP | YNiMoPF |
| MoO₃ (% pds) | 13,5 | 12,9 | 12,8 |
| NiO (% pds) | 3,1 | 3,0 | 2,9 |
| P₂O₅ (% pds) | 0 | 4,4 | 4,3 |
| F (% pds) | 0 | 0 | 1,05 |
| SiO₂ (% pds) | 16,2 | 15,4 | 15,1 |
| Complément à 100% composé majoritairement de Al₂O₃ (% pds) | 67,2 | 64,3 | 63,7 |

**Tableau 14 :**

| Caractéristiques des catalyseurs YMo | | | |
|---|---|---|---|
| Catalyseur | YMo | YMoP | YMoPF |
| MoO₃ (% pds) | 13,4 | 12,85 | 12,7 |
| P₂O₅ (% pds) | 0 | 4,4 | 4,4 |
| SiO₂ (% pds) | 16,6 | 15,9 | 15,7 |
| F (% pds) | 0 | 0 | 1,0 |
| Complément à 100% composé majoritairement de Al₂O₃ (% pds) | 70,0 | 66,8 | 66,1 |

### Exemple 15 : Comparaison des catalyseurs en hydrocraquage d'un qazole sous vide

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

On ajoute à la charge 0,6% poids d'aniline et 2% poids de diméthyl-disulfure afin de simuler les pressions partielles d'H₂S et d'NH₃ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

| | |
|---|---|
| Pression totale | 9 Mpa |
| Catalyseur | 80 cm³ |
| Température | 360-420°C |
| Débit d'hydrogène | 80 I/h |
| Débit de charge | 80 cm³/h |

Les performances catalytiques sont exprimées par la température qui permet d'atteindre un niveau de conversion brute de 70 % et par le rendement en essence et en carburéacteur (kérosène). Ces performances catalytiques sont mesurées sur le catalyseur après qu'une période de stabilisation, généralement au moins 48 heures, ait été respectée.

La conversion brute CB est prise égale à :
CB = % pds de 380°C ^{moins} de l'effluent
380°C ^{moins} représente la fractop, distillée à 1 Tp inférieure ou égale à 380°C.

Le rendement en essence (27-150) (ci dessous Rdt Ess) est égal au % poids de composés ayant un point d'ébullition compris entre 27 et 150 °C dans les effluents. Le rendement en carburéacteur (kérosène, 150-250) (ci dessous Rdt Kéro) est égal au % poids de composés ayant un point d'ébullition compris entre 150 et 250°C dans les effluents. Le rendement en gazole (250-380) est égal au % poids de composés ayant un point d'ébullition compris entre 250 et 380°C dans les effluents.

La température de réaction est fixée de façon à atteindre une conversion brute CB égale à 70% poids. Dans le tableau 15 suivant, nous avons reporté la température de réaction et les rendements en distillats léger pour les catalyseurs décrits dans les exemples ci-dessus.

**Tableau 15 :**

| Activités catalytiques des catalyseurs en hydrocraquage | | | |
|---|---|---|---|
| | T(°C) | Rdt Essence (% pds) | Rdt kérosène (% pds) |
| NiMo/Y | 375 | 20,5 | 24,1 |
| NiMoPN | 374 | 21,2 | 24,7 |
| NiMoPF/Y | 373 | 19,9 | 23,6 |
| Mo/Y | 375 | 21,3 | 24,3 |
| MoP/Y | 375 | 21,0 | 24,1 |
| MoPF/Y | 375 | 19,7 | 23,4 |
| NiMo/NU-85 | 386 | 24,6 | 10,8 |
| NiMoP/NU-85 | 385 | 35,1 | 11,8 |
| NiMoPF/NU-85 | 384 | 34,4 | 11,8 |
| Mo/NU-85 | 387 | 35,6 | 12,8 |
| MoP/NU-85 | 387 | 35,7 | 11,8 |
| MoPF/NU-85 | 386 | 35,7 | 12,3 |
| NiMoP/SiAl-NU-85 | 385 | 36,5 | 13,5 |
| NiMoPF/SiAl-NU-85 | 385 | 36,2 | 13,7 |
| NiMo/NU-86 | 373 | 36,3 | 12,3 |
| NiMoP/NU-86 | 371 | 36,9 | 13,4 |
| NiMoPF/NU-86 | 371 | 36,4 | 12,8 |
| Mo/NU-86 | 373 | 37,2 | 13,1 |
| MoP/NU-86 | 373 | 37,0 | 12.9 |
| MoPF/NU-86 | 373 | 36,8 | 13,4 |
| NiMoP/SiAl-NU-86 | 372 | 37,6 | 12,4 |
| NiMoPF/SiAl-NU-86 | 373 | 36,9 | 12,7 |
| NiMo/NU-87 | 384 | 37,5 | 12,0 |
| NiMoP/NU-87 | 383 | 37,1 | 12,2 |
| NiMoPF/NU-87 | 382 | 37,0 | 11,8 |
| Mo/NU-87 | 385 | 37,9 | 12,5 |
| MoP/NU-87 | 385 | 37,6 | 12,5 |
| MoPF/NU-87 | 385 | 27,3 | 12,8 |
| NiMoP/SiAl-NU-87 | 383 | 37,1 | 13,2 |
| NiMoPF/SiAl-NU-87 | 384 | 36,6 | 12,8 |

Le tableau 15 met en évidence que le procédé de l'invention utilisant un catalyseur contenant de la zéolithe NU-85, NU-86 ou de la zéolithe NU-87 conduit pour un niveau de conversion de 70 % à des rendements en essence supérieur par rapport aux catalyseurs non conformes, en particulier à base de zéolithe Y désaluminée. On notera que les rendements en essence sont meilleur avec le procédé utilisant le catalyseur à base de zéolithe NU-87. Par ailleurs, l'ensemble des catalyseurs selon l'invention conduit à des rendements en essence et en kérosène améliorés par rapport à ceux enregistrés dans le cas des catalyseurs de l'art antérieur.

## Revendications

1. Procédé d'hydrocraquage de charges hydrocarbonées en présence d'un catalyseur renfermant du phosphore et au moins un métal choisi dans le groupe formé par les métaux du groupe VIB et les métaux du groupe VIII de la classification périodique des éléments déposés sur un support calciné constitué d'au moins une matrice et d'au moins une zéolithe choisie parmi les zéolithes NU-85, NU-86 et NU-87.

2. Procédé selon la revendication 1, tel que la zéolithe comprise dans le catalyseur est la zéolithe NU-85.

3. Procédé selon la revendication 1, tel que la zéolithe comprise dans le catalyseur est la zéolithe NU-86.

4. Procédé selon la revendication 1, tel que la zéolithe comprise dans le catalyseur est la zéolithe NU-87.

5. Procédé selon l'une des revendications 1 à 4 **caractérisé en ce que** le catalyseur renferme en outre au moins un élément choisi dans le groupe VIIA de la classification périodique des éléments.

6. Procédé selon l'une des revendications 1 à 5 dans lequel le catalyseur renferme en poids par rapport au catalyseur :
• 0,1 à 60% d'au moins un métal choisi dans le groupe formé par les métaux du groupe VIB et du groupe VIII,
• 0,1 à 90% d'au moins une zéolithe choisie parmi les zéolithes NU-85, NU-86 et NU-87,
• 0,1 à 99% d'au moins une matrice minérale amorphe ou mal cristallisée,
• 0,1 à 15% de phosphore,
• 0 à 20% d'au moins un élément choisi dans le groupe VIIA.

7. Procédé selon l'une des revendications 1 à 6 dans lequel on opère préalablement un traitement de sulfuration du catalyseur.

8. Procédé selon l'une des revendications 1 à 7 telle que la charge est constituée d'au moins 80% en volume de composés dont les points d'ébullition sont d'au moins 350°C.

9. Procédé selon l'une des revendications 1 à 8 telle que la température est supérieure à 200°C, sous une pression supérieure à 0,1 MPa, avec un taux de recyclage d'hydrogène supérieur à 50 normaux litres d'hydrogène par litre de charge et avec une vvh comprise entre 0,1 et 20 h-1.

10. Procédé selon l'une des revendications 1 à 8 telle que la température est supérieure ou égale à 230°C, sous une pression supérieure à 5 MPa avec une quantité d'hydrogène supérieure à 100 normaux litres d'hydrogène par litre de charge avec une vitesse volumique horaire comprise entre 0,15 et 10h-1.

11. Procédé selon la revendication 10 telle qu'une étape préalable d'hydrotraitement est effectuée à une température comprise entre 350 et 460°C, sous une pression totale d'au moins 3MPa, avec une vitesse volumique horaire comprise entre 0,1 et 5h-1,avec une quantité d'hydrogène d'au moins 100NI/I de charge et en présence d'un catalyseur d'hydrotraitement.

## Patentansprüche

1. Verfahren zum Hydriercracken von Kohlenwasserstoffbeschickungen in Gegenwart eines Katalysators, der Phosphor und wenigstens ein Metall, gewählt aus der Gruppe, die durch die Metalle der Gruppe VIB und die Metalle der Gruppe VIII des Periodensystems der Elemente gebildet wird, abgeschieden auf einen kalzinierten Träger, der aus wenigstens einer Matrix uns wenigstens einem Zeolithen, gewählt unter den Zeolithen NU-85, NU-86 und NU-87 besteht.

2. Verfahren nach Anspruch 1, derart, dass der in dem Katalysator enthaltene Zeolith der NU-85-Zeolith ist.

3. Verfahren nach Anspruch 1, derart, dass der in dem Katalysator enthaltene Zeolith der NU-86-Zeolith ist.

4. Verfahren nach Anspruch 1, derart, dass der in dem Katalysator enthaltene Zeolith der NU-87-Zeolith ist.

5. Verfahren nach einem der Ansprüche 1 bis 4, **dadurch gekennzeichnet, dass** der Katalysator im übrigen wenigstens ein Element, gewählt aus der Gruppe VIIA des Periodensystems der Elemente einschließt.

6. Verfahren nach einem der Ansprüche 1 bis 5 bei dem der Katalysator an Gewicht im Verhältnis zum Katalysator einschließt:
- 0,1 bis 60% wenigstens eines Metalls, gewählt aus der Gruppe, die durch die Metalle der Gruppe VIB und der Gruppe VIII gebildet wird,
- 0,1 bis 90% wenigstens eines Zeolithen, der unter den Zeolithen NU-85, NU-86 und NU-87 gewählt ist,
- 0,1 bis 99% wenigstens einer amorphen oder schlecht kristallisierten mineralischen Matrix,
- 0,1 bis 15% Phosphor,
- 0 bis 20% wenigstens eines Elements, das aus der Gruppe VIIA gewählt ist.

7. Verfahren nach einem der Ansprüche 1 bis 6 bei dem man eine Vorbehandlung des Katalysators betreibt.

8. Verfahren nach einem der Ansprüche 1 bis 7, derart, dass die Beschickung aus wenigstens 80 Vol.-% von Verbindungen besteht, deren Siedepunkte wenigstens 350°C sind.

9. Verfahren nach einem der Ansprüche 1 bis 8, derart, dass die Temperatur über 200°C liegt, unter einem Druck über 0,1 MPa mit einem Wasserstoffrezyklierungsgrad über 50 Normalliter Wasserstoff pro Liter Beschickung bei einer vvh zwischen 0,1 und 20 h⁻¹.

10. Verfahren nach einem der Ansprüche 1 bis 8, derart, dass die Temperatur über 230°C liegt, unter einem Druck über 5 MPa mit einer Wasserstoffmenge über 100 Normalliter Wasserstoff pro Liter Beschickung bei einer vvh zwischen 0,15 und 10 h⁻¹.

11. Verfahren nach Anspruch 10, derart, dass eine Hydrotreatment-Vorbehandlungsstufe bei einer Temperatur zwischen 350 und 460°C, unter einem Gesamtdruck von wenigstens 3 MPa mit einer stündlichen Volumengeschwindigkeit zwischen 0,1 und 5 h⁻¹ mit einer Wasserstoffmenge von wenigstens 100NI/I Beschickung und in Gegenwart eines Hydrotreatmentkatalysators.

## Claims

1. A process for hydrocracking hydrocarbon-containing feeds in the presence of a catalyst comprising phosphorous and at least one metal selected from the group formed by metals from groups VIB and VIII of the periodic table deposited on a calcined support constituted by at least one matrix and at least one zeolite selected from NU-85, NU-86 and NU-87 zeolite.

2. A process according to claim 1 in which the catalyst comprises a NU-85 zeolite.

3. A process according to claim 1 in which the catalyst comprises a NU-86 zeolite

4. A process according to claim 1 in which the catalyst comprises a NU-87 zeolite

5. A process according to anyone of claim 1 to 4, **characterized in that** the catalyst also comprises at least one element selected from group VIIA of the periodic table.

6. A process according to any one of claims 1 to 5, in which the catalyst comprises, by weight with respect to the catalyst:
• 0.1% to 60% of at least one metal selected from the group formed by group VIB and group VIII metals;
• 0.1% to 90% of at least one zeolite selected from NU-85, NU-86 and NU-87 zeolite;
• 0.1% to 99% of at least one amorphous or low crystallinity mineral matrix;
• 0.1 to 15% of phosphorous;
• 0 to 20% of at least one element selected from group VIIA.

7. A process according to any one of claims 1 to 6, in which a prior catalyst sulphurisation treatment is carried out.

8. A process according to any one of claims 1 to 7, in which the feed is constituted by at least 80% by volume of compounds with a boiling point of at least 350°C.

9. A process according to any one of claims 1 to 8, in which the temperature is over 200°C, the pressure is over 0.1 MPa, the hydrogen recycle ratio is over 50 normal litres of hydrogen per litre of feed, and the HSV is in the range 0.1 to 20 h⁻¹.

10. A process according to any one of claims 1 to 8, in which the temperature is 230°C or more, the pressure is over 5 MPa, the quantity of hydrogen is over 100 normal litres of hydrogen per litre of feed, and the hourly space velocity is in the range 0.15 to 10 h⁻¹.

11. A process according to claim 10, in which a prior hydrotreatment step is carried out at a temperature in the range 350°C to 460°C, at a total pressure of at least 3 MPa, with an hourly space velocity in the range 0.1 to 5 h⁻¹, with a quantity of hydrogen of at least 100 Nl/l of feed and in the presence of a hydrotreatment catalyst.
